(19) Europäisches Patentamt
European Patent Office
Office européen des brevets

(11) **EP 4 459 290 A1**

(12) **EUROPEAN PATENT APPLICATION**
published in accordance with Art. 153(4) EPC

(43) Date of publication:
**06.11.2024 Bulletin 2024/45**

(21) Application number: **22915586.6**

(22) Date of filing: **22.11.2022**

(51) International Patent Classification (IPC):
**G01N 35/02** *(2006.01)*    **G01N 1/38** *(2006.01)*

(52) Cooperative Patent Classification (CPC):
**G01N 1/38; G01N 35/02**

(86) International application number:
**PCT/JP2022/043104**

(87) International publication number:
**WO 2023/127355 (06.07.2023 Gazette 2023/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.12.2021   JP 2021214289**

(71) Applicant: **HITACHI HIGH-TECH CORPORATION
Tokyo 105-6409 (JP)**

(72) Inventors:
• **KOURAI, Yuusuke
  Tokyo 100-8280 (JP)**
• **TATEMI, Masaru
  Tokyo 100-8280 (JP)**
• **SUZUKI, Mutsumi
  Tokyo 100-8280 (JP)**
• **SASAKI, Kota
  Tokyo 100-8280 (JP)**
• **YOSHIDA, Gorou
  Tokyo 105-6409 (JP)**
• **TANAKA, Yuto
  Tokyo 105-6409 (JP)**
• **TSUNASHIMA, Kenta
  Tokyo 105-6409 (JP)**

(74) Representative: **Mewburn Ellis LLP
Aurora Building
Counterslip
Bristol BS1 6BX (GB)**

(54) **CHEMICAL ANALYSIS APPARATUS AND CHEMICAL ANALYSIS METHOD**

(57)    Provided is a chemical analysis apparatus which has a stirring function for stirring, by using an ultrasonic element, a reagent or the like and a sample to be measured, and with which it is possible to infer the presence or absence of a reaction liquid and estimate the liquid amount of the reaction liquid without using a means such as a sensor and a visual inspection. This chemical analysis apparatus has an ultrasonic stirring mechanism and is characterized in that the ultrasonic stirring mechanism comprises: a piezoelectric element; a plurality of electrodes provided to the piezoelectric element; a power source unit for applying voltage to the electrodes; a detection unit for measuring electric impedance for each of the plurality of electrodes or for any combination of the electrodes; and an analysis unit for determining the liquid amount in a reaction vessel from the electric impedance detected by the detection unit. The chemical analysis apparatus is characterized in that the detection unit measures the electric impedance in a state where a reaction vessel having two or more different amounts of liquid dispensed therein faces the piezoelectric element, and the analysis unit estimates the liquid amount in the reaction vessel on the basis of the change amount in the electric impedance measured by the detection unit.

[FIG. 1]

**Description**

Technical Field

The present invention relates to a configuration of a chemical analysis apparatus and a failure diagnosis method thereof, and particularly to an effective technique applied to a chemical analysis apparatus having a stirring function of stirring a reagent or the like and a sample to be measured using ultrasonic waves generated by vibration of a piezoelectric element.

Background Art

In a chemical analysis apparatus in the related art, as a stirring means for a reagent and a sample to be measured, a system has been used in which a stirring rod having a distal end of a spatula shape for mixing a reagent with a sample is inserted into a reaction vessel, in which the reagent and the sample are mixed, and the stirring rod is rotated or reciprocated.

In such a chemical analysis apparatus, since a phenomenon called carry-over may occur in which the reagent or the sample adhered to the stirring rod affects the next analysis result, a mechanism for cleaning the stirring rod is required.

In order to solve this problem, for example, as disclosed in PTL 1 to PTL 4, there is an automatic analysis apparatus in which a method of applying ultrasonic waves to a reaction liquid in a reaction vessel is used for a stirring means for mixing a sample and a reagent necessary for analysis of the sample.

The stirring means using ultrasonic waves is a system of generating a flow in a sample and a reagent by the ultrasonic waves to mix and stir a reaction liquid thereof without using a stirring rod or the like, and thus is a technique capable of avoiding carry-over of the sample and the reagent caused by use of the stirring rod and avoiding contamination of cleaning water into a reaction vessel.

Citation List

Patent Literature

PTL 1: JP2001-13149A
PTL 2: JP2001-188070A
PTL 3: JP2010-96638A
PTL 4: JP2000-338113A

Summary of Invention

Technical Problem

As disclosed in PTL 1 to PTL 4, in a case where ultrasonic waves are used for the stirring means, for example, when ultrasonic waves are generated in a state where a reaction vessel to be stirred is not mounted or in a state where the reaction vessel is empty, there is a possibility that a piezoelectric element, which is an oscillation source of the ultrasonic waves, may be damaged by unintended ultrasonic waves reflected from a peripheral portion of a reaction vessel accommodating portion.

Further, when repeatedly generating the ultrasonic waves in the air, the piezoelectric element itself may be damaged by heat generation of the piezoelectric element.

Therefore, as a method of confirming presence or absence of a reaction vessel or presence or absence of a medium, through which ultrasonic waves are propagated, when generating the ultrasonic waves from the piezoelectric element, there is a method of providing a sensor that detects the reaction vessel or the medium.

However, this method may cause a decrease in reliability and an increase in cost due to complication of the mechanism.

According to PTL 1, a non-operation time of a stirring mechanism is used to detect an abnormality of a piezoelectric element and predict and warn against a failure in advance, and thus it is possible to prevent an unexpected stop of the apparatus.

In PTL 2, temperature information reflected in a state where a piezoelectric element or a piezoelectric element driving circuit is normally operating is stored, and is compared with temperature information reflected during the operation of a stirring mechanism, thereby performing a determination regarding an abnormality of the piezoelectric element or the piezoelectric element driving circuit.

However, in any of PTL 1 and PTL 2, there is no description regarding damage to the piezoelectric element caused when generating the ultrasonic waves in a state where the reaction vessel is not mounted or in a state where the reaction vessel is empty, and there is no description of a method for solving the problem.

PTL 3 discloses a method of estimating a surrounding condition before outputting sound waves from a piezoelectric element, and stopping output of sound waves when an abnormality is detected, which improves reliability of the piezoelectric element.

PTL 3 discloses an automatic analysis apparatus including: a stirring portion configured to stir, by a sound wave having a piezoelectric element as a sound source, a reagent and a sample to be measured that are discharged to a reaction vessel; a power supply unit capable of changing a voltage and a frequency that drive the piezoelectric element; an analysis unit configured to perform component analysis by causing the reagent and the sample to be measured to react with each other; and a control unit configured to control the stirring portion, the power supply unit, and the analysis unit. In the automatic analysis apparatus, a surrounding condition of the piezoelectric element at the time of sound wave output is estimated by measuring an electrical impedance from a voltage or a current waveform driving the piezoelectric element.

That is, instead of providing a sensor for monitoring the surrounding condition of the piezoelectric element separately from the piezoelectric element, the piezoelectric element itself serving as a sound source is used as a sensor. Accordingly, it is possible to confirm the presence or absence of the reaction vessel and the reaction liquid or the presence or absence of the medium, through which the sound wave propagates, when generating the sound wave from the piezoelectric element without complicating the configuration.

PTL 3 discloses a method of detecting a change in temperature of the medium, through which the sound wave propagates, based on a change in electrical impedance of the piezoelectric element.

According to PTL 3, since an acoustic impedance at a boundary of a reflector of the ultrasonic wave varies depending on the presence or absence of the reaction liquid in the reaction vessel, it is possible to confirm the presence or absence of the reaction liquid or the presence or absence of the medium, through which the sound wave propagates, by measuring a frequency at which the electrical impedance is minimum and the amount of change in electrical impedance at that time. Further, it is disclosed that the change in temperature of the medium through which the sound wave propagates can be detected based on the change in the electrical impedance of the piezoelectric element.

However, when the piezoelectric element is damaged or broken, desired measurement of the electrical impedance cannot be performed, and the confirmation of the presence or absence of the reaction liquid or the detection of the change in temperature cannot be performed.

Therefore, it is necessary to confirm, by another means, that the piezoelectric element is not damaged.

In PTL 4, there is no description regarding damage to a piezoelectric element caused when generating ultrasonic waves in a state where a reaction vessel is not mounted or in a state where the reaction vessel is empty.

Therefore, an object of the invention is to provide a chemical analysis apparatus and a chemical analysis method using the chemical analysis apparatus which has a stirring function of stirring, by using an ultrasonic element, a reagent or the like and a sample to be measured, and which is capable of estimating presence or absence of a reaction liquid and a liquid level height of the reaction liquid without using a means such as a sensor and a visual inspection.

Solution to Problem

In order to solve the above problems, the invention provides a chemical analysis apparatus including an ultrasonic stirring mechanism. The ultrasonic stirring mechanism includes a piezoelectric element, a plurality of electrodes arranged on the piezoelectric element, a power supply unit configured to apply a voltage to each of the electrodes, a detection unit configured to measure an electrical impedance for each of the plurality of electrodes or for any combination of the electrodes, and an analysis unit configured to determine a liquid level height in a reaction vessel based on the electrical impedance detected by the detection unit. The detection unit measures the electrical impedance in a state where a reaction vessel into which two or more different liquid amounts are dispensed faces the piezoelectric element. The analysis unit estimates the liquid level height in the reaction vessel based on an amount of change in the electrical impedance measured by the detection unit.

Further, the invention provides a chemical analysis method including the following steps: (a), a step of dispensing a sample to be measured into a reaction vessel; (b), a step of dispensing a reagent into the reaction vessel; (c), a step of moving the reaction vessel to a stirring portion and measuring an electrical impedance in a state in which the reaction vessel faces a piezoelectric element of the stirring portion; and (d), a step of estimating a liquid level height in the reaction vessel based on an amount of change in the electrical impedance measured in the step (c).

Advantageous Effects of Invention

According to the invention, it is possible to implement a chemical analysis apparatus and a chemical analysis method using the chemical analysis apparatus which has a stirring function of stirring, by using an ultrasonic element, a reagent or the like and a sample to be measured, and which is capable of estimating presence or absence of a reaction liquid and a liquid level height of the reaction liquid without using a means such as a sensor and a visual inspection.

Accordingly, it is possible to easily perform abnormality diagnosis of an ultrasonic stirring function provided in the chemical analysis apparatus.

Problems, configurations, and effects other than those described above will be clarified by the following description of embodiments.

Brief Description of Drawings

[FIG. 1] FIG. 1 is a schematic configuration diagram of an ultrasonic stirring mechanism according to Embodiment 1 of the invention.

[FIG. 2] FIG. 2 is a schematic configuration diagram of a chemical analysis apparatus according to Embodiment 1 of the invention.

[FIG. 3] FIG. 3 is a graph illustrating a measurement result example of an electrical impedance according to Embodiment 1 of the invention.

[FIG. 4] FIG. 4 is a graph illustrating an example of a relationship between the electrical impedance and a liquid amount according to Embodiment 1 of the invention.

[FIG. 5] FIG. 5 is a graph illustrating an example of a relationship between the liquid amount and a liquid level height according to Embodiment 1 of the invention.

[FIG. 6] FIG. 6 is a table illustrating an estimation example of the liquid level height according to Embodiment 1 of the invention.

[FIG. 7] FIG. 7 is a flowchart illustrating an operation example of the chemical analysis apparatus according to Embodiment 1 of the invention.

[FIG. 8] FIG. 8 is a graph illustrating a measurement result example of an electrical impedance according to Embodiment 2 of the invention.

Description of Embodiments

Hereinafter, embodiments of the invention will be described with reference to the drawings. Substantially the same or similar configurations are denoted by the same reference signs, and a repeated description thereof may be omitted.

Embodiment 1

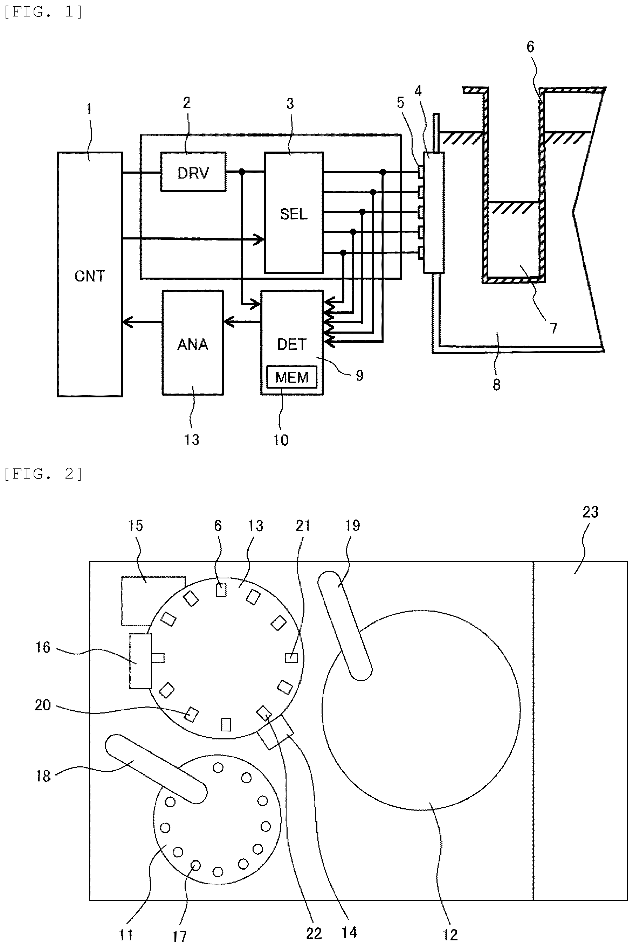

A chemical analysis apparatus and a chemical analysis method according to Embodiment 1 of the invention will be described with reference to FIGS. 1 to 7.

FIG. 1 is a diagram illustrating a part of the chemical analysis apparatus according to the embodiment and illustrates a schematic configuration of an ultrasonic stirring mechanism. FIG. 2 is a top view illustrating a schematic configuration of the chemical analysis apparatus according to the embodiment.

As illustrated in FIG. 2, the chemical analysis apparatus (also referred to as an automatic analysis apparatus) according to the embodiment includes a sample holding portion 11, a reagent storage portion 12, a reaction portion 13, a stirring portion 14, a measurement unit 15, and a cleaning portion 16. An analysis device control unit 23 controls specific operations of the components.

A sample 17 to be measured held in the sample holding portion 11 is collected by a sample dispensing mechanism 18 by an amount required for analysis, and is discharged to a reaction vessel 6 at a sample discharging position 20. An amount of reagent required for analysis is collected from the reagent storage portion 12 by a reagent dispensing mechanism 19, and is added, at a reagent discharging position 21, to the reaction vessel 6 to which the sample 17 to be measured is discharged.

The sample and the reagent discharged to the reaction vessel 6 are moved to a stirring position 22 and are stirred and mixed by ultrasonic waves output from a piezoelectric element of the stirring portion 14. Thereafter, the sample 17 to be measured mixed sufficiently by the stirring portion 14 is subjected to component analysis in the measurement unit 15. After completion of the analysis, the reaction vessel 6 is cleaned by the cleaning portion 16 and is ready for another analysis.

As illustrated in FIG. 1, the stirring portion 14 includes, as main components, a stirring control unit 1, a power supply unit 2, an electrode selector 3, a piezoelectric element 4, an electrode 5, a detection unit 9, and a recording unit 10.

A plurality of electrodes 5 are arranged in a height direction of the reaction vessel 6 at the time when the reaction vessel 6 is mounted to the chemical analysis apparatus.

When a voltage is applied from the power supply unit 2 controlled by the stirring control unit 1 to the electrode 5 of the piezoelectric element 4 via the electrode selector 3, the piezoelectric element 4 outputs ultrasonic waves that propagate to the reaction vessel 6 via a ultrasonic wave propagation medium 8, and a reaction liquid 7 in the reaction vessel 6 is stirred by the ultrasonic waves.

A plurality of electrodes 5 of the piezoelectric element 4 are provided in the height direction of the reaction vessel 6 to detect presence or absence of the reaction liquid 7 in the reaction vessel 6 and a liquid level height of the reaction liquid 7.

The electrode 5 to be measured is selected by the electrode selector 3, a voltage is applied from the power supply unit 2 to the selected electrode 5 via the electrode selector 3, and the piezoelectric element 4 outputs ultrasonic waves.

At this time, the detection unit 9 measures an electrical impedance of the piezoelectric element 4, and records a measurement result in the recording unit 10.

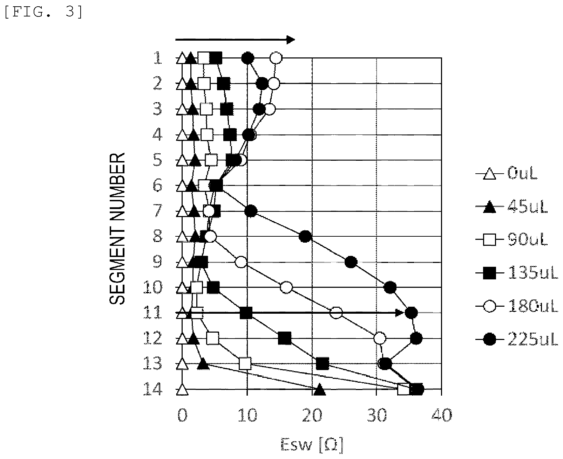

FIG. 3 illustrates a measurement result example of the electrical impedance. A vertical axis corresponds to segments of the piezoelectric element (positions of the electrode 5 in the height direction of the reaction vessel 6), and a horizontal axis indicates an electrical impedance Esw obtained from an electrical impedance Z. Esw is calculated by Formula 1.

[Formula 1]

$$E_{SW} = \frac{1}{f_2 - f_1} \int_{f_1}^{f_2} |Z(f) - Z_{base}(f)| df \qquad \cdots (1)$$

The Esw is calculated by integrating, in a measured frequency range of the ultrasonic waves (from a frequency f1 to a frequency f2), a difference between measurement results of the electrical impedance at different reaction liquid amounts.

An electrical impedance Z (f) is a measured value of each reaction liquid amount, and $Z_{base}$ (f) is a certain measured value of the reaction liquid. FIG. 3 illustrates a result obtained by calculation with a measured value in a case of the reaction liquid amount of 0 ul as $Z_{base}$.

A segment 1 is an opening side of the reaction vessel 6, and a segment 14 is a bottom side of the reaction vessel 6.

In a state where the reaction liquid amount is 0 ul (the reaction vessel 6 is empty), since the reference and the measured value are the same, the electrical impedance Esw is 0 ul in each segment.

When the reaction liquid is dispensed into the reaction vessel 6, since an acoustic impedance at a boundary where the ultrasonic waves are reflected changes as disclosed in PTL 3, the electrical impedance Z changes. Accordingly, the electrical impedance Esw calculated by Formula 1 also changes. As indicated by the result of the segment 14, as the reaction liquid increases, the amount by which the boundary of reflection of the ultrasonic waves is filled with the reaction liquid also changes, and the amount of change in the electrical impedance Z changes stepwise.

On the other hand, the electrical impedance Esw also changes in an upper segment where the boundary of reflection of the ultrasonic waves is not filled with the reaction liquid. This is due to the fact that an apparent mass of the reaction vessel 6 changes as a result of the reaction liquid being dispensed into the reaction vessel 6, and detection is possible by using Formula 1.

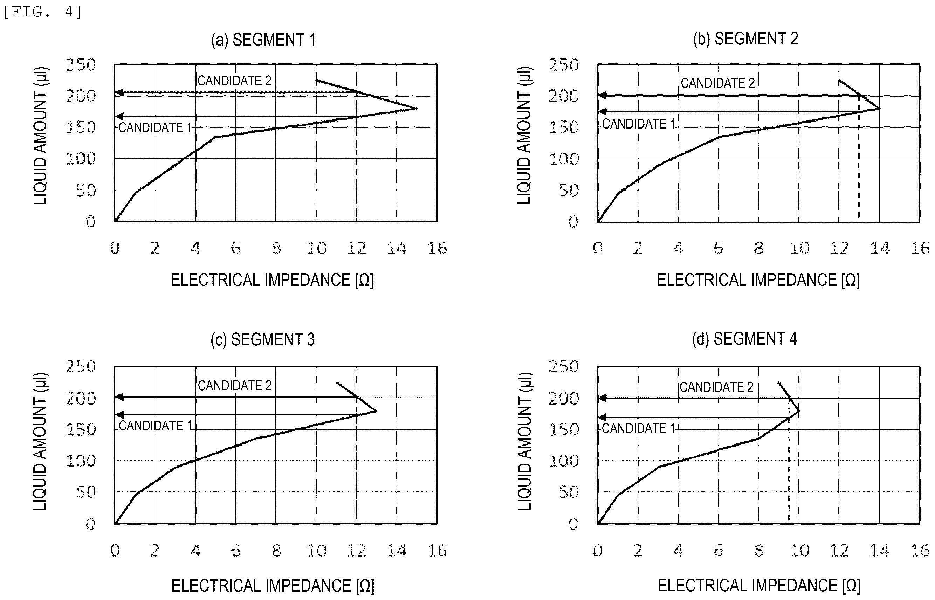

FIG. 4 illustrates a relationship between the electrical impedance Z and the liquid amount. Results of the segment 1 to the segment 4 in a state where there is no reaction liquid in the reaction vessel 6 (the reaction vessel 6 is empty) are shown. A horizontal axis indicates the electrical impedance Esw, and a vertical axis indicates the liquid amount. The results are each a calibration curve up to 225 ul, and indicate values of the segment 1 to the segment 4 in a state where there is no reaction liquid in the reaction vessel 6.

A change in the electrical impedance Esw is different from a change in the electrical impedance Esw in a case where the reaction liquid fills a reflection region of the ultrasonic waves. The electrical impedance Esw and the reaction liquid have one-to-one correspondence from 0 $\Omega$ to 8 $\Omega$ of the electrical impedance, and the liquid amount can be calculated by calculating the electrical impedance Esw.

When the electrical impedance Esw is equal to or greater than 8$\Omega$, the correspondence between the electrical impedance Esw and the liquid amount may not be 1:1. This is due to a vibration mode of the reaction vessel 6, which is a reflector of ultrasonic waves, and the electrical impedance Esw does not monotonically increase with an increase in the liquid amount.

In this case, candidate values of the liquid amount are obtained from the electrical impedance Esw measured in each segment, and the liquid amount is estimated by combining liquid amounts obtained from the candidate values. For example, a candidate value with a small variance or standard deviation is selected as an estimated value of the liquid amount.

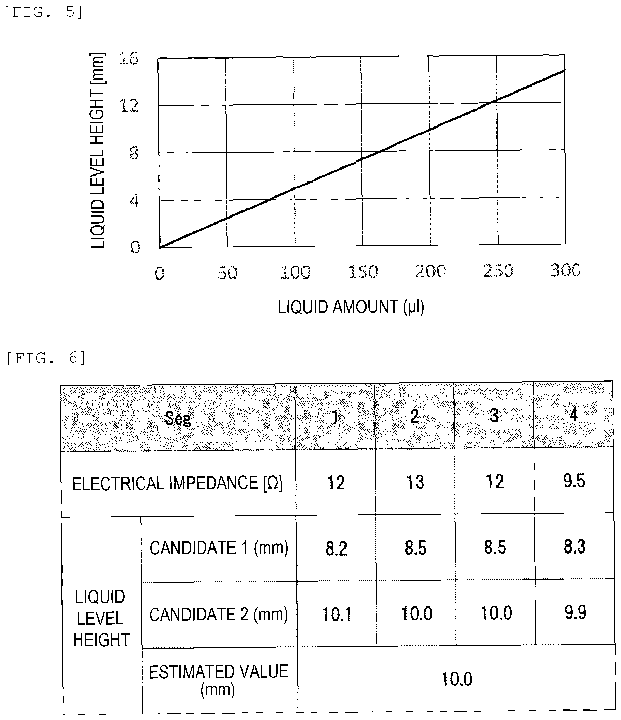

FIG. 5 illustrates a relationship between the liquid amount and the liquid level height. Since the reaction vessel 6 has a structure in a rectangular parallelepiped shape or a cylindrical shape that is not deformed, the shape of the reaction vessel 6 can be grasped in advance, and a calibration curve of the liquid level height with respect to the liquid amount is created. FIG. 5 illustrates a calibration curve of the liquid amount and the liquid level height taking a reaction vessel structure of a rectangular parallelepiped as an example, which shows a relationship that the liquid level height monotonically increases with an increase in the liquid amount.

FIG. 6 shows an estimated result of the liquid level height. The measurement result of the electrical impedance Esw shown in FIG. 3 is displayed for each segment, the liquid amount is calculated by using the relationship between the electrical impedance Esw and the liquid amount as illustrated in FIG. 4, and the liquid level height is calculated based on the liquid amount using the calibration curve shown in FIG. 5 and the calculated value is listed as a candidate value.

Standard deviations for a candidate 1 and a candidate 2 are calculated and compared, the candidate 2 having a smaller value of the standard deviation is estimated as the reaction liquid amount, and an average value of the candidate values is displayed as a final estimated value (10.0 mm).

In the chemical analysis apparatus according to the embodiment, it is also possible to measure the electrical impedance of the piezoelectric element 4 by performing frequency sweeping of the voltage to be applied from the power supply unit 2 to the electrode 5 and integrating electrical impedances in a measurement range of the swept frequency.

The "sweeping" refers to an operation of generating vibration while gradually changing the frequency (vibration frequency) of the voltage.

In addition, the electrical impedance measured in advance when there is no reaction liquid 7 in the reaction vessel 6 is set as a reference value and a difference between the electrical impedance measured by the detection unit 9 and the reference value is integrated, making it possible to measure the electrical impedance.

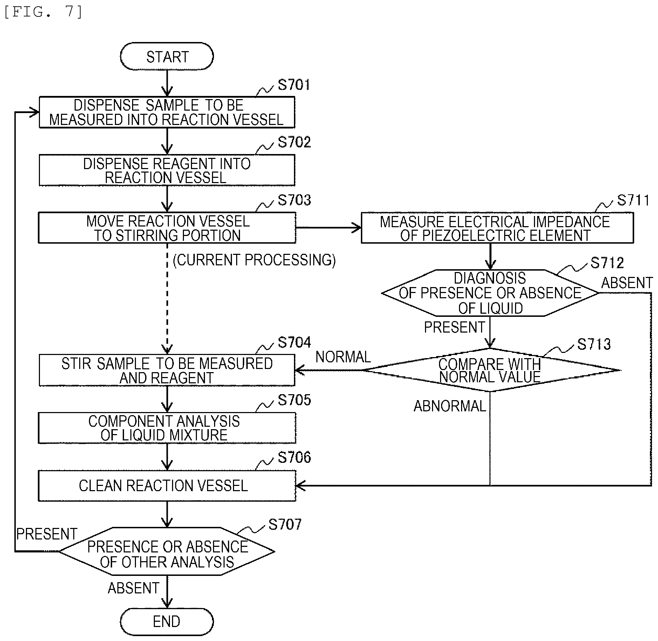

FIG. 7 illustrates an operation example of the chemical analysis apparatus according to the embodiment.

First, in step S701, a necessary amount of the sample 17 to be measured used for analysis is dispensed into the reaction vessel 6.

Next, in step S702, a necessary amount of reagent used for analysis is dispensed into the reaction vessel 6.

Subsequently, in step S703, the reaction vessel 6 into which the sample 17 to be measured and the reagent are dispensed is moved to the stirring portion 14.

After the reaction vessel 6 is moved to the stirring portion 14, the electrical impedance of the piezoelectric element 4 is measured in step S711.

Next, in step S712, based on a value of the electrical impedance measured in step S711, presence or absence of the reaction liquid 7 is diagnosed, and a liquid level height of the reaction liquid 7 is estimated.

If the reaction liquid 7 is present in the reaction vessel 6 (present), the process proceeds to step S713. If the reaction liquid 7 is not present (absent), the process proceeds to S706.

In step S713, a measured value of the electrical impedance is compared with a normal value measured in advance. In a normal case, the process proceeds to step S704, and in an abnormal case, the process proceeds to step S706.

In step S704, ultrasonic waves are applied to the reaction vessel 6 to stir the sample 17 to be measured and the reagent.

Subsequently, in step S705, the measurement unit 15 analyzes components of a liquid mixture (reaction liquid 7) .

Next, in step S706, the cleaning portion 16 cleans the reaction vessel 6 after completion of the analysis and after abnormality diagnosis.

Finally, in step S707, it is confirmed whether another analysis item is programmed, and it is determined whether to end the process or perform next measurement. If there is no other analysis item, the process is ended. If there is another analysis item, the process returns to step S701, and the processing of step S701 and subsequent steps are repeated.

In a chemical analysis apparatus in the related art to which the invention is not applied, the process proceeds from step S703 to step S704 without going through steps S711 to S713. (Current Processing)

As described above, the chemical analysis apparatus according to the embodiment includes an ultrasonic stirring mechanism (stirring portion 14). The ultrasonic stirring mechanism (stirring portion 14) includes the piezoelectric element 4, the plurality of electrodes 5 arranged on the piezoelectric element 4, the power supply unit 2 configured to apply a voltage to each of the electrodes 5, the detection unit 9 configured to measure an electrical impedance for each of the plurality of electrodes 5 or for any combination of the electrodes 5, and an analysis unit (stirring control unit 1) configured to determine a liquid level height in the reaction vessel 6 based on the electrical impedance detected by the detection unit 9. The detection unit 9 measures the electrical impedance in a state where the reaction vessel 6 into which two or more different liquid amounts are dispensed faces the piezoelectric element 4. The analysis unit (stirring control unit 1) estimates the liquid level height in the reaction vessel 6 based on an amount of change, in a height direction of the reaction vessel 6, of the electrical impedance measured by the detection unit 9.

The electrode selector 3 is connected between the power supply unit 2 and the electrode 5, and a voltage is applied from the power supply unit 2 to the electrode 5 selected by the electrode selector 3. The detection unit 9 measures the electrical impedance for the electrode 5 selected by the electrode selector 3.

The analysis unit (stirring control unit 1) estimates the liquid level height in the reaction vessel 6 based on a relationship set in advance between the electrical impedance and the liquid level height.

According to the chemical analysis apparatus and the chemical analysis method of the embodiment, by measuring the electrical impedance of the piezoelectric element 4 and processing the measured value, it is possible to estimate the presence or absence of the reaction liquid 7 and the liquid level height without using a sensor, visual inspection or the like for confirming the presence or absence of the reaction liquid 7.

Embodiment 2

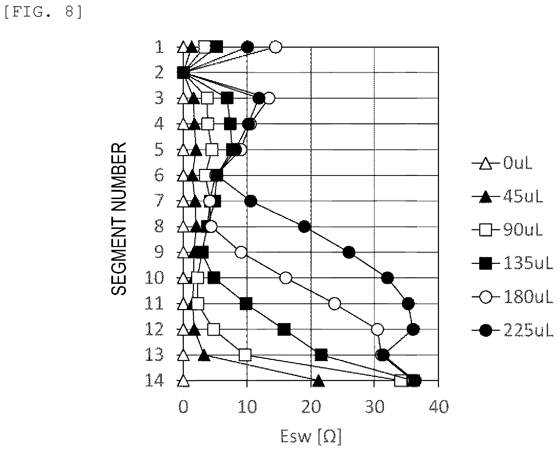

A chemical analysis apparatus and a chemical analysis method according to Embodiment 2 of the invention will be described with reference to FIG. 8. FIG. 8 is a graph illustrating a measurement result example of an electrical impedance of the embodiment.

The configuration of the chemical analysis apparatus and the chemical analysis method according to the embodiment are basically the same as those of Embodiment 1. In Embodiment 2, failure diagnosis of the stirring portion 14 is further performed.

In the measurement result of the electrical impedance illustrated in FIG. 8, in the segment 2, a change in the electrical impedance with respect to a change in the liquid amount is not captured. If the piezoelectric element 4 fails, the change in the liquid amount of the reaction liquid 7 in the reaction vessel 6 cannot be correctly captured. This is a failure mode in which the electrical impedance does not change.

There is also a failure mode in which the amount of change in the electrical impedance is greater than in a normal state.

In this case, a failure is determined based on comparison with the amount of change in the electrical impedance of a nearby segment.

A timing of performing the failure diagnosis can be set at the same timing as the step of diagnosing the presence or absence of the reaction liquid 7 in step S712 of FIG. 7. When an estimated value of the liquid level height of a segment greatly differs from that of a surrounding (adjacent) segment based on the measurement result of the electrical impedance of the piezoelectric element 4, the segment is diagnosed as failed. In this case, the diagnosis of the presence or absence of the reaction liquid 7 is performed based on measurement results of segments other than the segment diagnosed as failed.

However, since the failure of the piezoelectric element 4 is detected, it is desirable to shift to the cleaning of the reaction vessel 6 in step S706.

As described above, in the chemical analysis apparatus of the embodiment, the analysis unit (stirring control unit 1) performs failure diagnosis of the piezoelectric element 4 based on the relationship set in advance between the electrical impedance and the liquid level height.

According to the chemical analysis apparatus and the chemical analysis method of the embodiment, by measuring the electrical impedance of the piezoelectric element 4 and processing the measured value, it is possible to estimate the presence or absence of the reaction liquid 7 and the liquid level height without using a sensor, a visual inspection or the like for confirming the presence or absence of the reaction liquid 7. Further, abnormality diagnosis of the piezoelectric element 4, which is an ultrasonic element, can be easily performed.

The invention is not limited to the embodiments described above, and includes various modifications. For example, the embodiments described above have been described in detail to facilitate understanding of the invention, and the invention is not necessarily limited to those including all the configurations described above. A part of the configuration of one embodiment can be replaced with the configuration of another embodiment, and the configuration of another embodiment can be added to the configuration of one embodiment. A part of a configuration according to each embodiment may be added to, deleted from, or replaced with another configuration.

Reference Signs List

1: STIRRING CONTROL UNIT
2: POWER SUPPLY UNIT
3: ELECTRODE SELECTOR
4: PIEZOELECTRIC ELEMENT
5: ELECTRODE
6: REACTION VESSEL
7: REACTION LIQUID
8: ULTRASONIC WAVE PROPAGATION MEDIUM
9: DETECTION UNIT
10: RECORDING UNIT
11: SAMPLE HOLDING PORTION
12: REAGENT STORAGE PORTION
13: REACTION PORTION
14: STIRRING PORTION
15: MEASUREMENT UNIT
16: CLEANING PORTION
17: SAMPLE TO BE MEASURED
18: SAMPLE DISPENSING MECHANISM
19: REAGENT DISPENSING MECHANISM
20: SAMPLE DISCHARGING POSITION
21: REAGENT DISCHARGING POSITION
22: STIRRING POSITION
23: ANALYSIS APPARATUS CONTROL UNIT

**Claims**

1. A chemical analysis apparatus comprising:

   an ultrasonic stirring mechanism, wherein
   the ultrasonic stirring mechanism includes

   a piezoelectric element,
   a plurality of electrodes arranged on the piezoelectric element,
   a power supply unit configured to apply a voltage to each of the electrodes,
   a detection unit configured to measure an electrical impedance for each of the plurality of electrodes or for any combination of the electrodes, and
   an analysis unit configured to determine a liquid level height in a reaction vessel based on the electrical impedance detected by the detection unit,

   the detection unit measures the electrical impedance in a state where a reaction vessel into which two or more different liquid amounts are dispensed faces the piezoelectric element, and
   the analysis unit estimates the liquid level height in the reaction vessel based on an amount of change in the electrical impedance measured by the detection unit.

2. The chemical analysis apparatus according to claim 1, wherein
   the plurality of electrodes are arranged in a height direction of the reaction vessel when the reaction vessel is mounted to the chemical analysis apparatus.

3. The chemical analysis apparatus according to claim 1, further comprising:

   an electrode selector connected between the power supply unit and the electrodes, wherein
   the voltage is applied from the power supply unit to the electrode selected by the electrode selector, and
   the detection unit measures the electrical impedance for the electrode selected by the electrode selector.

4. The chemical analysis apparatus according to claim 1, wherein
   the analysis unit estimates the liquid level height in the reaction vessel based on a relationship set in advance between the electrical impedance and the liquid level height.

**5.** The chemical analysis apparatus according to claim 1, wherein
the analysis unit performs failure diagnosis of the piezoelectric element based on a relationship set in advance between the electrical impedance and the liquid level height.

**6.** The chemical analysis apparatus according to claim 1, wherein

a frequency of the voltage to be applied from the power supply unit to the electrode is swept, and
the electrical impedance is measured by integrating the electrical impedances in a measurement range of the swept frequency.

**7.** The chemical analysis apparatus according to claim 1, wherein

the electrical impedance measured in advance when there is no liquid in the reaction vessel is used as a reference value, and
the electrical impedance is measured by integrating a difference between the electrical impedance measured by the detection unit and the reference value.

**8.** A chemical analysis method comprising the following steps:

(a), a step of dispensing a sample to be measured into a reaction vessel;
(b), a step of dispensing a reagent into the reaction vessel;
(c), a step of moving the reaction vessel to a stirring portion and measuring an electrical impedance in a state in which the reaction vessel faces a piezoelectric element of the stirring portion; and
(d), a step of estimating a liquid level height in the reaction vessel based on an amount of change in the electrical impedance measured in the step (c).

**9.** The chemical analysis method according to claim 8, wherein
the electrical impedance is measured at a plurality of positions in a height direction of the reaction vessel in the step (c).

**10.** The chemical analysis method according to claim 8, wherein
the liquid level height in the reaction vessel is estimated based on a relationship set in advance between the electrical impedance and the liquid level height.

**11.** The chemical analysis method according to claim 8, wherein
failure diagnosis of the piezoelectric element is performed based on a relationship set in advance between the electrical impedance and the liquid level height.

**12.** The chemical analysis method according to claim 8, wherein

a frequency of the voltage to be applied to the piezoelectric element is swept, and
the electrical impedance is measured by integrating the electrical impedances in a measurement range of the swept frequency.

**13.** The chemical analysis method according to claim 8, wherein

the electrical impedance measured in advance when there is no liquid in the reaction vessel is used as a reference value, and
the electrical impedance is measured by integrating a difference between the electrical impedance measured in the step (c) and the reference value.

[FIG. 1]

[FIG. 2]

[FIG. 3]

[FIG. 4]

(a) SEGMENT 1
(b) SEGMENT 2
(c) SEGMENT 3
(d) SEGMENT 4

[FIG. 5]

LIQUID AMOUNT (μl)

[FIG. 6]

| Seg | 1 | 2 | 3 | 4 |
|---|---|---|---|---|
| ELECTRICAL IMPEDANCE [Ω] | 12 | 13 | 12 | 9.5 |
| LIQUID LEVEL HEIGHT — CANDIDATE 1 (mm) | 8.2 | 8.5 | 8.5 | 8.3 |
| LIQUID LEVEL HEIGHT — CANDIDATE 2 (mm) | 10.1 | 10.0 | 10.0 | 9.9 |
| LIQUID LEVEL HEIGHT — ESTIMATED VALUE (mm) | 10.0 | | | |

[FIG. 7]

```
                    ┌──────────┐
                    │  START   │
                    └────┬─────┘
                         │           ⌇S701
        ┌────────────────▼─────────────────┐
        │   DISPENSE SAMPLE TO BE          │
        │ MEASURED INTO REACTION VESSEL    │
        └────────────────┬─────────────────┘
                         │           ⌇S702
        ┌────────────────▼─────────────────┐
        │   DISPENSE REAGENT INTO          │
        │     REACTION VESSEL              │
        └────────────────┬─────────────────┘
                         │           ⌇S703                           ⌇S711
        ┌────────────────▼─────────────────┐      ┌──────────────────────────────────┐
        │   MOVE REACTION VESSEL           ├──────►│ MEASURE ELECTRICAL IMPEDANCE     │
        │   TO STIRRING PORTION            │      │   OF PIEZOELECTRIC ELEMENT        │
        └──────────────────────────────────┘      └──────────────────┬───────────────┘
                 ┊ (CURRENT PROCESSING)                              │       ⌇S712
                 ┊                                      ◇────────────▼───────────◇  ABSENT
                 ┊                                     ╱    DIAGNOSIS             ╲──────┐
                 ┊                                    ⟨ OF PRESENCE OR ABSENCE    ⟩     │
                 ┊                                     ╲     OF LIQUID           ╱      │
                 ┊                                      ◇──────────┬────────────◇       │
                 ┊                                          PRESENT │                   │
                 ┊           ⌇S704      NORMAL                      │       ⌇S713       │
        ┌────────▼─────────────────┐         ◇───────────────▼──────────────◇          │
        │ STIR SAMPLE TO BE MEASURED│◄────────⟨    COMPARE WITH            ⟩            │
        │      AND REAGENT          │         ╲     NORMAL VALUE          ╱             │
        └────────┬─────────────────┘          ◇──────────┬─────────────◇              │
                 │           ⌇S705                   ABNORMAL │                         │
        ┌────────▼─────────────────┐                         │                         │
        │   COMPONENT ANALYSIS     │                         │                         │
        │    OF LIQUID MIXTURE     │                         │                         │
        └────────┬─────────────────┘                         │                         │
                 │           ⌇S706                           │                         │
        ┌────────▼─────────────────┐◄───────────────────────┘                         │
        │  CLEAN REACTION VESSEL   │◄─────────────────────────────────────────────────┘
        └────────┬─────────────────┘
  PRESENT        │           ⌇S707
  ┌──────◇───────▼────────◇
  │     ╱ PRESENCE OR ABSENCE ╲
  │    ⟨  OF OTHER ANALYSIS   ⟩
  │     ╲                    ╱
  │      ◇────────┬─────────◇
  │        ABSENT │
  │        ┌──────▼─────┐
  │        │    END     │
  │        └────────────┘
  └──► (back to S701)
```

[FIG. 8]

## INTERNATIONAL SEARCH REPORT

International application No.

**PCT/JP2022/043104**

### A. CLASSIFICATION OF SUBJECT MATTER

*G01N 35/02*(2006.01)i; *G01N 1/38*(2006.01)i
FI: G01N35/02 D; G01N1/38

According to International Patent Classification (IPC) or to both national classification and IPC

### B. FIELDS SEARCHED

Minimum documentation searched (classification system followed by classification symbols)

G01N35/02; G01N1/38

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2021/256027 A1 (HITACHI HIGH TECH CORP) 23 December 2021 (2021-12-23) paragraphs [0023], [0027]-[0040], [0044]-[0054], [0060]-[0068], fig. 2, 4-5, 7-10 | 1-2, 4-13 |
| Y | | 3 |
| Y | JP 2010-096638 A (HITACHI HIGH-TECHNOLOGIES CORP) 30 April 2010 (2010-04-30) paragraphs [0015]-[0024], fig. 3-4 | 3 |
| A | WO 2009/011314 A1 (OLYMPUS CORPORATION) 22 January 2009 (2009-01-22) paragraphs [0022]-[0024], [0031]-[0040] | 5, 11 |
| A | JP 2000-338113 A (HITACHI LTD) 08 December 2000 (2000-12-08) paragraphs [0015]-[0017], [0023] | 1-13 |
| A | JP 2019-124608 A (HITACHI HIGH-TECHNOLOGIES CORP) 25 July 2019 (2019-07-25) paragraphs [0040], [0045]-[0046], [0056]-[0057] | 1-13 |
| A | JP 2009-036666 A (OLYMPUS CORPORATION) 19 February 2009 (2009-02-19) paragraphs [0026]-[0034] | 6-7, 12-13 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 January 2023** | **31 January 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

International application No.

**PCT/JP2022/043104**

| Patent document cited in search report | | | Publication date (day/month/year) | Patent family member(s) | | | Publication date (day/month/year) |
|---|---|---|---|---|---|---|---|
| WO | 2021/256027 | A1 | 23 December 2021 | (Family: none) | | | |
| JP | 2010-096638 | A | 30 April 2010 | (Family: none) | | | |
| WO | 2009/011314 | A1 | 22 January 2009 | US paragraphs [0018]-[0020], [0027]-[0036] EP CN | 2010/0112704 2172779 101755213 | A1 A1 A | |
| JP | 2000-338113 | A | 08 December 2000 | (Family: none) | | | |
| JP | 2019-124608 | A | 25 July 2019 | (Family: none) | | | |
| JP | 2009-036666 | A | 19 February 2009 | US paragraphs [0051]-[0059] | 2009/0031789 | A1 | |

Form PCT/ISA/210 (patent family annex) (January 2015)

17

**REFERENCES CITED IN THE DESCRIPTION**

**Patent documents cited in the description**

- JP 2001013149 A
- JP 2001188070 A
- JP 2010096638 A
- JP 2000338113 A